# EUROPEAN PATENT SPECIFICATION

(11) **EP 2 378 800 B1**
(45) Date of publication and mention of the grant of the patent: **14.02.2018**
(21) Application number: 09834150.6
(22) Date of filing: 22.12.2009
(51) Int. Cl.: H04W 12/02, H04L 29/06, H04L 12/58, H04W 12/08

(54) **SECURE COMMUNICATION SYSTEM**
GESICHERTES KOMMUNIKATIONSSYSTEM
SYSTÈME DE COMMUNICATIONS SÉCURISÉ

(30) Priority: 23.12.2008 ES 200803669; 26.06.2009 ES 200930365
(43) Date of publication of application: 19.10.2011
(73) Proprietor: FMF Gestión, S.L., AD500 Andorra la Vella (AD)
(72) Inventor: Troyano Tiburcio, Fernando, 08810 Sant Pere De Ribes (Barcelona) (ES)
(74) Representative: Reiser & Partner Patentanwälte mbB
(86) International application number: PCT/ES2009/000594
(87) International publication number: WO 2010/072863

(56) References cited:
- EP-A1- 1 835 430
- WO-A2-2007/006815
- GB-A- 2 403 633
- US-A1- 2002 107 002
- US-A1- 2006 294 304
- US-A1- 2008 114 922
- FIELDING ET AL: "RFC 2616 Hypertext Transfer Protocol -- HTTP/1.1 (part of)", INTERNET CITATION, June 1999 (1999-06), XP002204677, Retrieved from the Internet: URL:http://www.w3.org/Protocols/rfc2616/rf c2616-sec14.html [retrieved on 2002-07-04]

## Description

The present invention relates to a communication system.

In particular, the present invention relates to a communication system intended especially to preserve privacy in telephone messaging communication, although the present invention is not necessarily limited to said application.

The security, and more particularly the privacy of communications is one of the problems arising with communications via mobile telephone networks via mobile messaging protocols. Specifically, in communications via mobile messaging, the following events occur:
- the terminal (usually a mobile telephone) receives the message without user control;
- the terminal sends a message received notification which is displayed on the user interface (screen) of the mobile terminal;
- the terminal physically stores the message received in its memory device.

Consequently, any third person who accesses the terminal of the user will know if there are new messages and can access the messages stored in the memory device, including new messages that have not yet been read by the user.

Indeed, various studies conclude that most couple infidelity cases are discovered through mobile telephones.

The present invention discloses new technical means for maintaining the privacy of mobile telephone messages.

Document EP 1788771A discloses a system and a method for managing electronic messages. Sending devices encrypt the messages and are received by a server. The server applies a series of security procedures which determine whether the message received will be sent to the end user or not.

Document EP 1921792 discloses a communication system which enables data to be communicated between a first and a second terminal device based on a password shared between those terminal devices. This system is characterised in that said first terminal device uses a trigger to inform the other terminal that data communication has begun via a communication channel and a communication method. In response to the transmission and reception of the data communication trigger a communication channel is established, which uses a second communication method between the device and a relay server which forwards the encrypted password, the communication channel is changed from the first communication channel to the second communication channel, which uses a second communication means between the second device and a second relay server which forwards the encrypted password, the communication channel is changed to the communication channel for the second method and via the channel said encrypted password is shared between the terminal devices.

Document WO 2007/107554 discloses a method for controlling users via a communication system which includes a server and a communication device (for example, a mobile telephone) which communicates via a communication network. In this case, the server fulfils the purpose of maintaining a database which comprises data for controlling the communication device, enabling secret personal codes and the identity of a user to be verified based on the message received and the control data.

Document WO 2007/006815 A2 discloses an encryption method and a system for transfer secure messages to and from mobile telephones in a way such that those secure messages may not be intercepted by Third Parties, e.g., by accessing to the SMSC where a copy of an SMS message is always made prior to the onward transmission. Said system comprises a secure message server having a memory and in which secure messages are transmitted and stored in the secure message server memory for subsequent collection for the intended recipient. In said collection process, the intended user of the message periodically needs to check the secure server for any messages and on seeing that there is one message stored on said server, said user downloads the message to their mobile telephone. Consequently, the message is stored on the mobile device memory and therefore accessible and/or retrievable for any third person.

Document US 2002/107002 A1 discloses a system for sending text message alerts to mobile communications devices in which said text message contains only a summary and the user can access further information by downloading a response web page. The system comprises: an information provider which supplies to a server information relating to products/services of interest to several users; a server which receives, stores and summarizes said information and sends it with an Internet link to a user communication device who can download a response web page with the original information. This system clearly forms part of the state of the art.

The invention is defined by the appended claims. The object of the present invention is to disclose a system (a combination of technical means and their interrelations) which can maintain privacy without the need to use encryption or store messages on the terminal (although said possibilities are not excluded), and which prevents a third person from knowing that a private communication even exists. The present invention also has the advantage that it can be implemented on existing communication systems.

According to the present invention the message sender sends via a communication device (typically a mobile telephone) a message with a structure that differs from that of a standard mobile telephone message. In particular, said message has at least one private portion. More preferably, said message has two portions, at least one of which is confidential. The modified message, unlike what happens in known communication systems, is not sent directly to the mobile communication device of the recipient, but is sent in its entirety to a server with special characteristics. Said server has a structure such that it can differentiate each of the two portions of the message and select the transmission channel for sending each of said portions depending on its nature. The non-confidential portions are sent (typically by SMS) to the receiving mobile device (typically a mobile telephone), for example via the conventional transmission channels. The public portion of the modified message may typically act as notification of the existence of a confidential portion of the message (said notification may include an instruction for the receiving mobile device). For its part, the confidential portion of the message is preferably stored on the server until the user of the receiving mobile device decides to recover and read said confidential portion from his device (mobile telephone), using an application provided on his device. This may be an IP-type communication management application but could also be a dedicated application. To do this, an instruction must be sent to the server from the mobile device to access from the mobile telephone. Thus, the confidential portion of the message is not stored in the memory device of the receiving mobile device (it is always displayed on the mobile telephone screen but it is not stored), and it is therefore impossible for third persons to access the content of the confidential message or even to know of its existence.

In particular, the present invention comprises a communication system comprising
- a sending communication device,
- a mobile messaging server, and
- a receiving communication device (which preferably will be a mobile device),
in which the sending communication device sends a message via a communication network to the mobile messaging server for sending to the mobile communication device via a mobile telephone communication network,
the server being provided with a communication module for receiving and sending the message,
the receiving communication device being provided with an electronic memory for storing mobile telephone messages, a user interface screen and a module to display stored messages on the interface screen, wherein
- the message sent by the communication device contains at least a private portion (preferably, it will contain a public portion and a private portion), said message being sent to a secure server, and
- the system comprises a secure server which has a module for recognising and managing the public and private portions of the message received, such that the communication module of the server sends only the public portion of the message via the mobile telephone communication network, the secure server being available for enquiry thereon, and sends the private portion through a different communication channel. According to the present invention, the last phase preferably takes place by leaving the private portion of the message sent by the sending device stored in a dedicated memory device, the mobile communication device also being provided with a communication module which enables it to access the private portion of the message stored on the secure server in order to display it on the interface screen without the need for storage in the memory device of the receiving mobile device.

To do this, according to an aspect of the present invention, the receiving communication device has a communication module which enables said device to access the private portion of the message stored on the secure server, said communication module having sub-modules to operate on the resources of the receiving communication device, said sub-modules comprising an interface sub-module to display the message graphically on the screen and a sub-module for controlling the non-volatile memory of the receiving communication device, so that the private message is not stored accessibly in the non-volatile memory of the receiving communication device.

The graphic (not alphanumeric) representation of the message which follows on the screen allows it to not be stored accessibly in the non-volatile memory of the communication device receiving the message, so that a third person cannot detect the existence of a secure message which he cannot access. For this to occur with maximum security, the memory control sub-module preferably deletes the information relating to the private portion once the interface sub-module has displayed said private portion graphically on the screen.

Where the message sent by the sending device has a public portion and another private portion, the recognition and management module of the secure server must differentiate between the public portion and the private portion. If it does not contain a public portion (or if this portion is blank), the module can generate a public portion automatically if necessary. The public portion of the message sent to the receiving communication device contains a trigger for the mobile communication device to initiate communication with the server via the communication module of the receiving communication device.

It is also possible for the public message not to contain an instruction and it is the responsibility of the receiving user to initiate communication with the secure server on receipt of the public portion.

Preferably, the secure server sends the public portion to the mobile messaging server.

It is also possible, in a preferred embodiment, for the secure server to comprise the mobile messaging server as an integrated module.

To perform the interrelations of the system according to the invention, the secure server preferably also comprises
- a message processing module to distinguish the public portion and private portion of the messages, and
- a module for managing secure communications with the receiving mobile devices.

Furthermore, and with the same object, preferably both the mobile receiving communication device and the sending device comprise a communication module for communicating with the secure server.

Preferably, the communication module comprises a data-compression sub-module, an IP communication sub-module (for example, HTTP) and a mobile telephone messaging communication sub-module (for example, SMS).

Particularly preferably for the present invention, the sending communication device is a mobile telephone device and the receiving communication device is also a mobile telephone device.

To increase security, communications with the secure server relating to messages comprising private portions are preferably encrypted. Also preferably, the secure server requests user identification and password to receive or send messages comprising private portions.

Communications of private messages between the receiving communication device and the secure server are preferably HTTP communications.

### Definitions

Device: any device capable of receiving any type of message via a communication network, interpreting said message, storing it in its own memory device and displaying it on a user interface.

Mobile device: any device capable of receiving any type of message via a wireless communication network, interpreting said message, storing it in its own memory device and displaying it on a user interface.

Mobile telephone: portable device for accessing various mobile telephone and data transmission media.

Message: any type of digital information, including SMS text, MMS, photographs, videos, e-mails and voice which can be received, stored and displayed on a mobile device.

Application: set of instructions and procedures for a device which determines and controls at least part of the operation of a device.

Server: set of IT devices capable of receiving, storing, coordinating and sending data via different transmission channels.

Channel: any network or channel for sending, transmitting and/or receiving data.

For a better understanding, the accompanying drawings show as an example an explanatory but not limiting preferred embodiment of the present invention.
Fig. 1 shows schematically the basic physical structure of an embodiment of the present invention, consisting of a platform for sending private telephone messaging messages on a pre-existing public structure that uses cellular technology.
Fig. 2 shows schematically the basic physical structure with detail of the server of an embodiment of the present invention in which all communications between sender and recipient pass through the same server.
Fig. 3 shows schematically the sending function of a public message.
Fig. 4 shows schematically the sending function by the sender and the access function by the recipient of a private message.

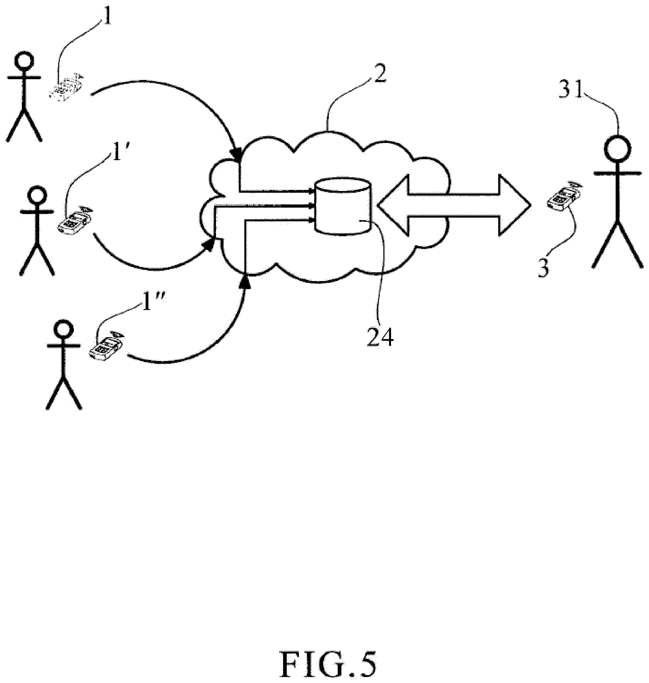

Fig. 5 shows schematically the sending and reception functions for the public portions of the messages, and the sending and accessing functions for the private portions from various senders to a recipient.
Fig. 6 shows schematically a physical structure similar to that shown in Fig. 2 in which communication flows are established between the server and the sender and between the server and the recipient.
Fig. 7 shows in greater detail the actions, instructions and data flows set up between server and recipient in the example of Fig. 6.
Fig. 8 is a diagram of the modules of a mobile communication device suitable for operating as the receiver in the embodiment of Figs. 6 and 7.
Fig. 9 is a main flow chart for the example of Figs. 6 to 8.
Fig. 10 is a flow chart for a data module of an embodiment according to Figs. 6 to 9.
Fig. 11 is a diagram showing the management architecture of the device for receiving communications in order not to store the private portion of the message.

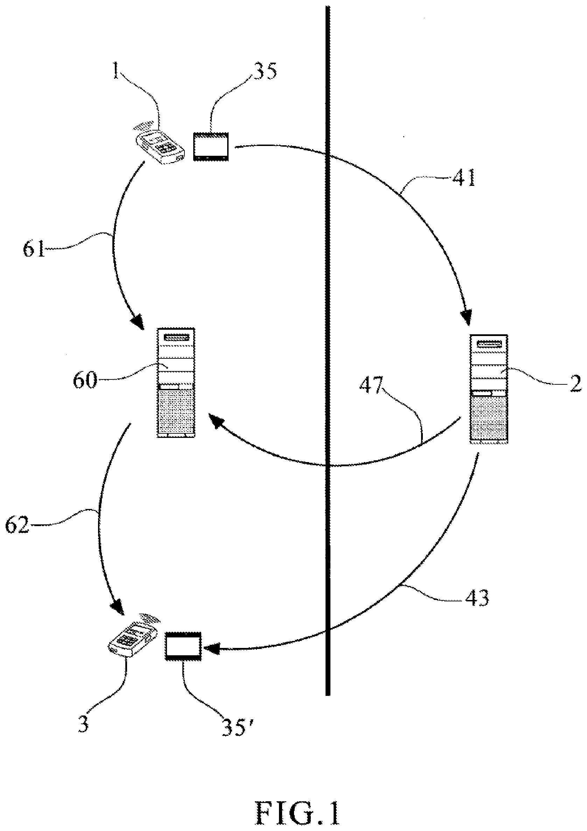

Fig. 1 shows schematically the basic physical structure of an embodiment of the invention, consisting of a system or platform for sending private telephone messaging messages on a pre-existing public structure or system that uses cellular technology.

The public structure (to the left of the separation line) comprises a sending communication device, in this particular case a mobile terminal 1, a mobile telephone messaging server 60 (e.g. an SMS gateway), and a mobile receiving communication device, in this case a mobile telephone or personal organiser 3. In normal operation, the sending communication device 1 sends an SMS to the mobile receiving communication device 3 via the mobile telephone network. According to existing technologies, the message is sent 61 to the SMS gateway 60 which in turn sends it 62 to the mobile receiving communication device, which stores the message in a memory device and displays a message received notification on a screen, while waiting for a keystroke before displaying the message stored in memory on the screen.

In a possible implementation of an embodiment of the present invention, shown in the figure of the example, a server 2 for private mobile messages or PMMP server (Private Mobile Message Platform) is provided in addition to the SMS gateway 60.

Secondly, the sending mobile terminal 1 has an application enabling the user of the sending mobile terminal 1 to generate a message via the mobile terminal interface (e.g. a screen or keypad) for the mobile receiving communication device 3 which contains a public portion and a private portion, and which is sent 41 to the PMMP server 2. To send the message, mobile telephone or alternatively well-supported IP protocols on wireless or non-wireless networks can be used. If a dedicated application is used, communication may follow security procedures similar to those explained below for accessing messages by the receiving mobile device. The PMMP performs actions on the message received and sends 47 a public SMS message, which serves as notification, to the receiving mobile communication terminal 3 via the SMS gateway 60.

The public SMS may contain an instruction for an application 35 residing in the volatile memory of the receiving mobile device. Said instruction may be added to the message by the PMMP server 2. Said application 35 may be similar to that of the sending mobile device 1 or it may have different characteristics. Said instruction will, via the different mechanisms explained below for example, cause the receiving mobile terminal 3 to access 43 the PMMP server 2 via a communication protocol to display the message stored in a memory device of the PMMP on the screen, without storing said message in the memory device of the receiving mobile terminal 3.

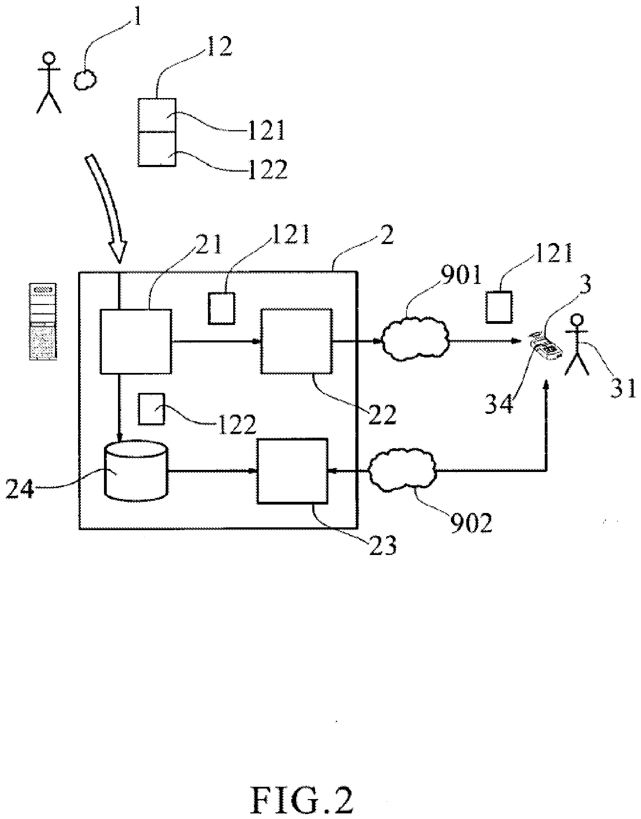

Fig. 2 shows a similar diagram in which the PMMP server 2 comprises an SMS gateway 22 instead of the standard SMS gateway. The figure shows a sending mobile device 1 sending a mobile telephone message 12 which contains a public portion 121 (e.g. a notification or coded text) and a private portion 122, the privacy of which is to be preserved. The message 12 is sent to the PMMP server 2. The PMMP server 2 has a message-processing module 21 which distinguishes between the public portion 121 and the private portion 122 of the message 12. The private portion 122 is stored in a memory device 24 of the PMMP server 2, whereas the public portion 121 is sent to the SMS gateway (or other mobile messaging gateway) module 22. Before being sent, the message processing module 21 can alter the content of the public portion 121, for example by adding a text or including an instruction for an application residing in the receiving mobile device 3, if appropriate. The SMS gateway module 22 sends the public portion 121 via a determined first channel 901, preferably a mobile messaging channel, for example an SMS channel. The user 31 receives the public SMS 121 on his receiving mobile device 3, and an SMS received notification is sent to the display screen 34. As already mentioned, the public SMS 121 may contain an instruction, or may act as a notification which can only be recognised by the receiving user 31, giving him access, from the receiving mobile terminal 3 and via a second channel 902, for example an HTTP channel, to a management module for secure communications with the receiving mobile devices, e.g. an HTTP module 23 of the PMMP server 2. Through the HTTP channel and following an instruction from the receiving mobile terminal 3, the HTTP module 23 transforms the private message 122 into a format that can be displayed on the screen 34 of the receiving mobile terminal 3 without the need for prior storage in its non-volatile memory device as a message. To do this, prior identification of the receiving user 31 may be required through account identification and a password.

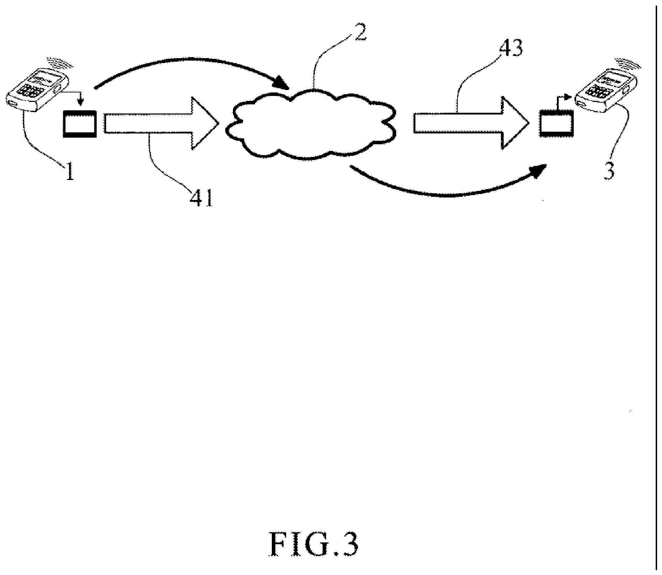

Fig. 3 shows the flow followed by the public messages and the private portions of the message.

In particular, the message is sent 41 from the sending communication device 1 to the PMMP server 2, which in turn sends it 43 to the receiving mobile device 3.

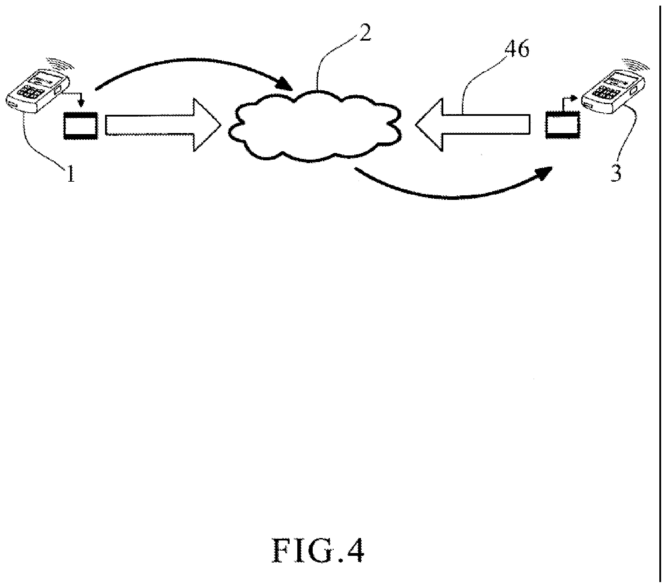

In contrast, Fig. 4 shows the flow for the private portions of the messages.

The private portion is sent from the sending communication device 1 to the PMMP server 2, but it is the receiving mobile terminal 3 which accesses 46 the content of the private portion stored on the PMMP server 2.

To increase privacy, it is recommended that the receiving mobile device request that a user and a password or PIN (login) be sent. A similar request may also be made to the sending device 1 before sending the message, or the private portion thereof.

It will be understood that the system shown has the advantage that the identification of the sending device 1 can be concealed or altered as seen by the receiving mobile device 3 in the public portion of the message, correct identification occurring on communication of the private portion.

Furthermore, the existence of a message-processing module 21 according to the present invention, in combination with the rest of the system, has other advantages. For example, a recipient 31 who has various mobile receiving devices may select the device on which to receive the message according to the message attributes (e.g. the sender), which enhances privacy. Moreover, it is also possible to send a single public message for various public/private messages received on the PMMP server 2 once pre-established conditions have been met (e.g. time, hour or number of messages received).

Another advantage of the PMMP server 2 compared with known mobile messaging servers (e.g. SMS gateway) is that it enables messages from different senders 1, 1', 1" to be stored in a memory device 24 which is continuously available to the receiving user 31 even after they have been read.

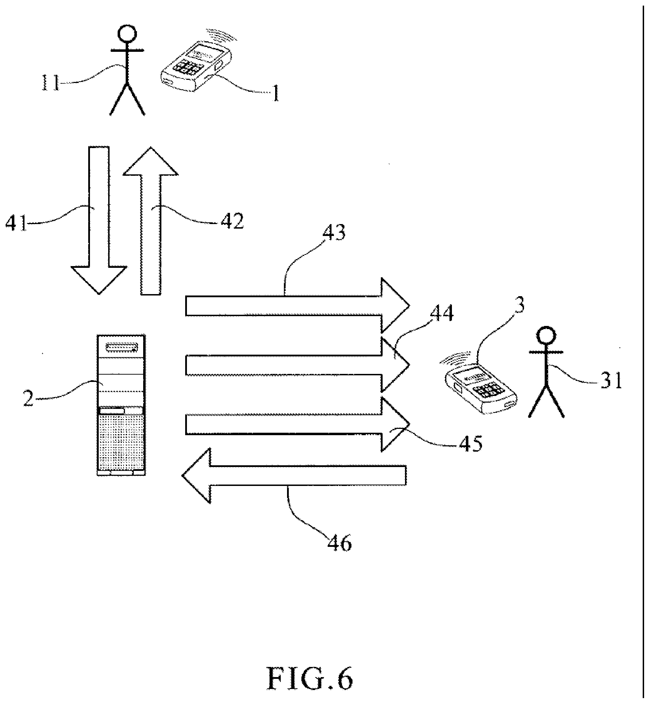

Figs. 6 to 10 show the architecture, physical structure, modules, relationships and communications established in another embodiment of the present invention.

In this embodiment, the receiving user 31 receives 43 a public message or notification and can accept or reject the communication simply by sending 46 an "accept" or "reject" message guaranteeing the validity of the communications and identities of the generating user 11 and the receiving user 31.

The sending user 11 sends 41 a proposal or message as described above via a communication device 1. In reply, the PMMP server 2 can send 42 a reply, for example, an acknowledgement of receipt, an acknowledgement of reception by the recipient or more preferably a request for validation / identification (see Fig. 6).

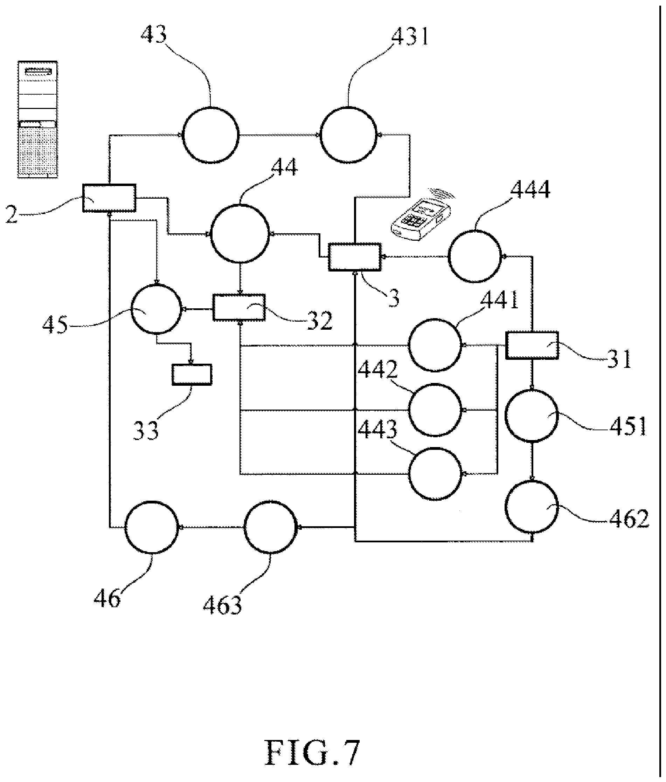

The PMMP server 2 processes the message sent from the sending device 1 and sends 43 a public SMS to the receiving mobile device 3, which displays 431 the notification on the interface screen 34 (see Fig. 7).

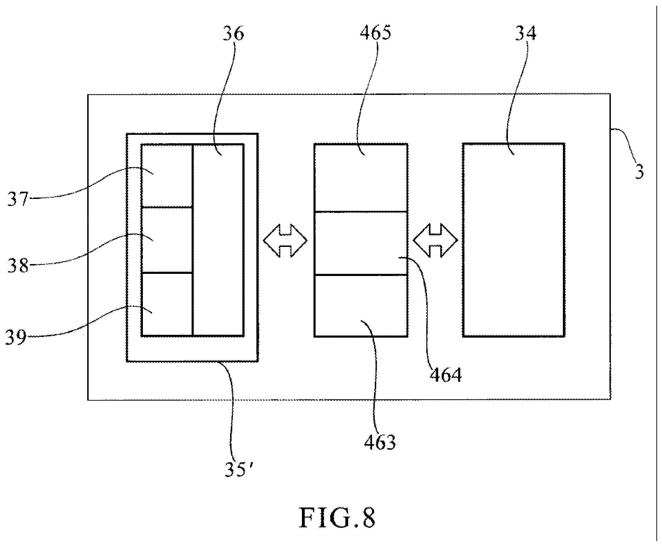

The mobile receiving device 3 in the example shown is provided, in addition, with a communication module 35' which in turn has a compressor 36, an SMS communication sub-module 37, an HTTP communication sub-module 38 together with other communication sub-modules 39 deemed appropriate and/or necessary (see Fig. 8). In addition there may also be special sub-modules for digital signature 463, authentication 465 and configuration management 464.

The function of the communication module 35' consists of managing and carrying out the communication between the receiving mobile device 3 and the PMMP server 2. The compression sub-module 36 reduces the size of the information sent to lower the cost and duration of the communication as much as possible. The HTTP sub-module 38 is used during communication with the PMMP server 2 initiated by the receiving mobile device 3, excluding for example, sending electronically signed documents.

The SMS sub-module 37 can be used if an HTTP communication is not available. In this case, the SMS sub-module 37 packages the communication as SMS messages to enable performance of the communication procedures that must be completed by the system, for example the data flow shown in Fig. 7 (login, etc.).

Once the notification has been displayed on the interface screen 34, the receiving user 31 reads 461 the public SMS sent (displayed on the screen) and may accept 462 or reject it, by means of an action on the interface (pressing a key, for example). In this particular embodiment, this causes an acceptance message to be sent 46, which may be accompanied by a signature 463 for acceptance. Once the acceptance has been received, the PMMP server 2 can download 45 the private portion of the message in a format that can be read by the application 35 residing on the mobile device. In some cases, the private portion of the message may be stored in a memory device 33 of the receiving mobile device 3, not automatically but in a manner controlled by the user via the application 35 (see Fig. 7).

In the flow chart of Fig. 7 the possibility of the receiving mobile device 3 downloading 44 an application 32 from the PMMP server 2 is also shown. Once the application 372 is downloaded, the user may preferably create an account 441, access 442 the PMMP server voluntarily via said application 35 (login) and read again 443 private messages stored on the PMMP server used.

To access the application, said application will preferably in the embodiment shown ask for identification 451 via the display screen of the mobile device 3. To verify the identity, the application connects (typically via HTTP or HTTPS) to the PMMP server 2 and carries out a search in a database of the PMMP 2. If the search result is positive (successful login), the application 35 recovers from the PMMP server 2 the list of private messages that are not located in the memory device of the receiving mobile device 3, displays 464 the list on the screen and, if appropriate 462, downloads the message or messages in the memory of the receiving mobile device 3.

The application 35 may also be used to write messages 12 which contain a public portion 121 and a private portion 122. To do this, the application requests content for the different portions of the message and requests identification from the recipient (for example by means of a user name or telephone number). The application stores the message in a database in the memory device, possibly encrypting and/or compressing the message, connects to the server (e.g. via HTTP or HTTPS) and sends 41 the message, together with login information, for example.

To send, the data module of the application 35 may use alternative connection means.

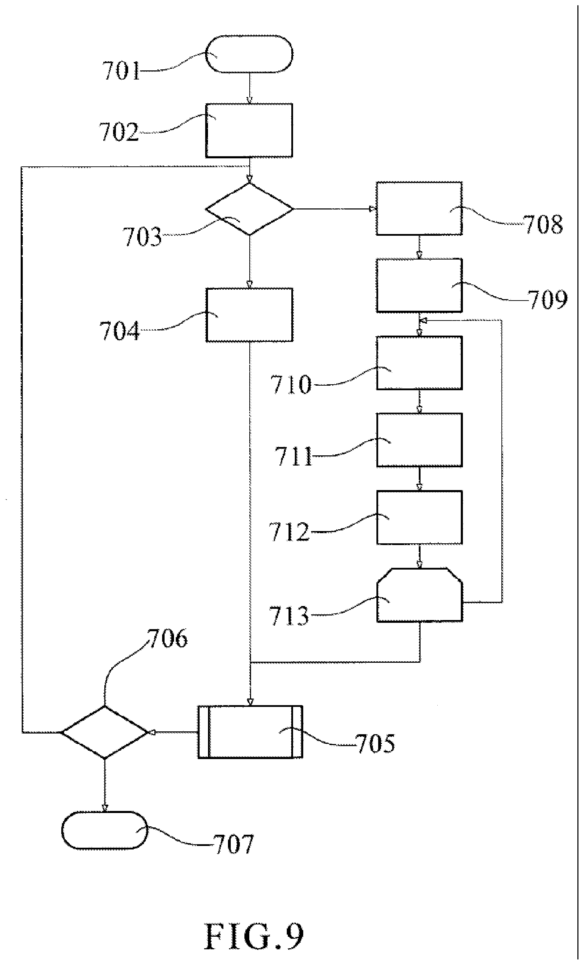

Thus, according to the example shown in Fig. 9, after the send instruction 701, and compression, encryption and/or storage 702, the device checks 703 if HTTP communication is available. If it is, it sends 704 the message and waits 705 for a response from the PMMP server 2. If HTTP is not available, it calculates 708 the number of SMS messages needed to send the message 12, prepares 709 the device 1, 3 for the multiple sends and sets up a loop which is repeated as long as there are still data 713 to be sent, and generates 710, numbers 711 and sends 712 the SMS (see Fig. 9).

Once a response 706 has been received from the PMMP server 2, a corresponding message 707 is displayed on the screen of the device 1, 3.

Once a message 12 has been received, the PMMP server 2 typically:
- verifies the identification of the sender 1;
- searches for the recipient 3 in a database (name, telephone number, etc.);
- if the search is not successful, asks the sender 1 for confirmation 42 and if it receives said confirmation, adds the new recipient to its database;
- if the search is positive (the user exists), stores the message in a memory device, amends the existing message databases and sends the public portion (modified or not) to the recipient by means of an appropriate API depending on the gateway (typically an SMS gateway).

The public portion or portions, which may or may not act as notification of the existence of a confidential portion, are received by the mobile receiving communication device, and by executing the device application, after passing the security controls (identification, login), the receiving user can access the messages.

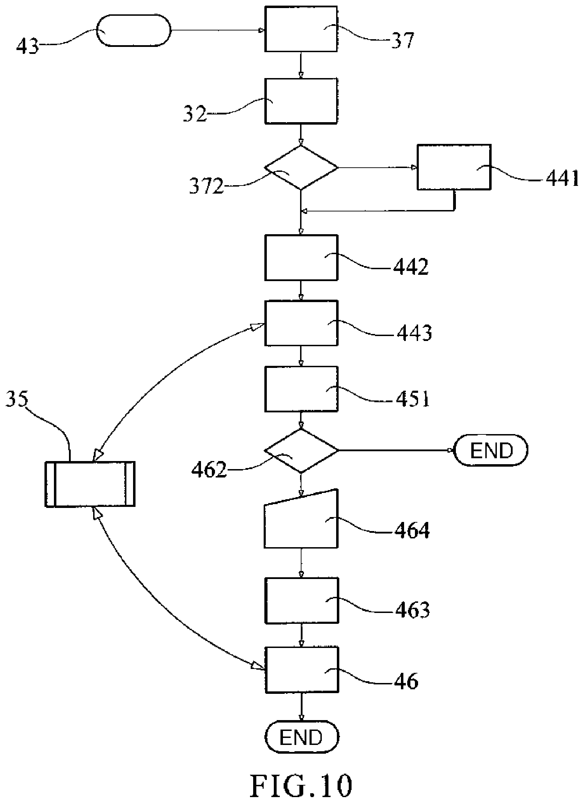

Fig. 10 shows a flow chart which in some embodiments may be considered a principal flow of data that can be extracted from the data flow chart shown in Fig. 7. In Fig. 10, similar or equivalent elements to those described previously have been indicated with identical reference numerals, and therefore the diagram in Fig. 10 will not be described in depth.

The diagram shows how, after sending 43 the notification in which the SMS communication sub-module 37 participates, the application 32 is installed and/or booted up (if necessary). Depending 372 on whether the user is registered or not, an account 441 is created and/or accessed 442. On receiving a request to read the message 443, the communication module 35 may display a proposal 451 which, if accepted 462 by the user, leads, using the configuration management method, to a field 469 being displayed to input the acceptance, to the proposal with acceptance being signed via the digital signature module 463, and to the proposal 46 being sent, solely by way of an example and as a particular embodiment.

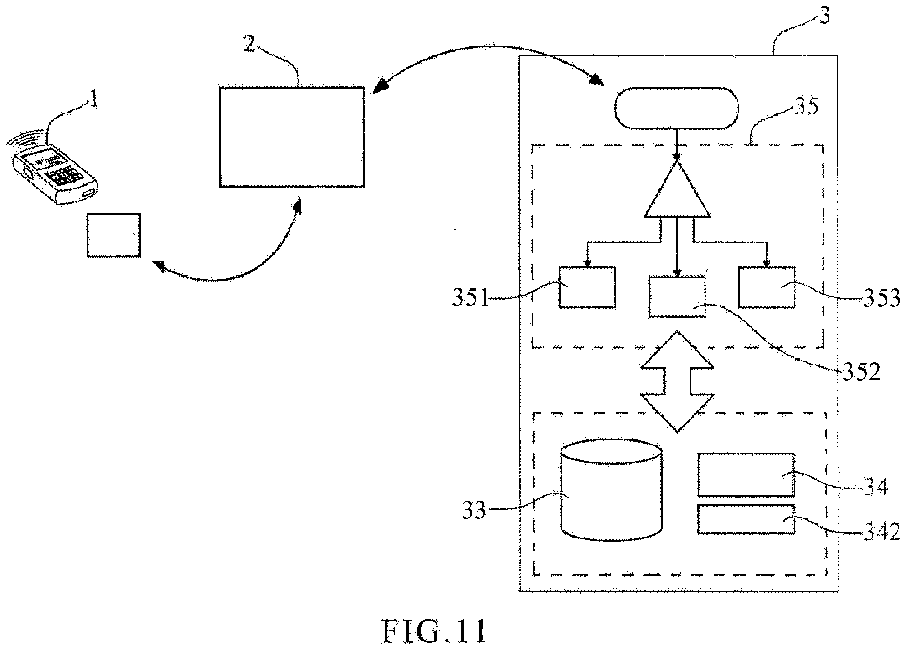

An example of architecture designed to maintain the security of the private portion of the message has been illustrated in Fig. 11.

The messages are processed by various sub-modules 351, 352, 353, etc. The modules are interchangeable (plug-ins) to deal with different kinds and types of messages. A text message thus suitably processed by the corresponding plug-in 351 will display the text on the screen 34. This will also occur if the message is of a different type (for example, an image and/or video). A microcode sub-module 352 will contain a series of instructions for operating on the resources of the receiving communication device 3 (non-volatile memory 33, interface screen 34, interface keypad 342, etc.), which in combination allow operations to be performed thereon. Thus, it is possible to display the screen, ask the user for data, amend fields in a message, delete or create a message and request or send additional information to the server, among other operations. In particular, the sub-modules can make decisions on the management of the memory devices 33 to prevent storage of the private portions of the messages, except where there is an explicit instruction from the user to the contrary. Thus, when accessing the mobile device 3, a third person is prevented from knowing that private messages are stored which he cannot access.

As will be understood, through the present invention, non-public portions are prevented from being seen by third persons who have access to the mobile receiving communication device without the need for encryption of the communications (although this may also occur), and without the need to store the private messages in the memory of the mobile device, which would alert third persons to the existence of a private and/or encrypted message.

Although the invention has been described with respect to preferred embodiments, these should not be considered as limiting the invention, which will be defined by the broadest possible interpretation of the following claims.

## Claims

1. Communication system which comprises
- a sending communication device (1),
- a mobile messaging server (60, 22), and
- a receiving communication device (3), said communication system being of the type in which the sending communication device (1) sends (61) a mobile telephone message via a communication network to the mobile messaging server (60), which in turn sends it to the receiving communication device (3) via a mobile telephone communication network,
the server (60, 22) being provided with a communication module for receiving and sending said mobile telephone message,
the receiving communication device (3) being provided with a non-volatile electronic memory (33) for storing said mobile telephone message, a user interface screen (34) and a module to display said stored mobile telephone message on the interface screen (34), wherein the sending communication device (1) sends a message (12), which contains at least a private portion (122), said message (12) being sent to a secure server (2) comprised within the system, said secure server (2) comprising a message processing module (21) for recognising and managing the public (121) and private (122) portions of the message (12) received, such that the communication module of the server sends only the public portion (121) of the message (12) via the mobile messaging server (60, 22) to the receiving communication device (3), leaving the private portion (121) in the secure server (2) available for consultation through a different communication channel, wherein the receiving communication device (3) has a communication module (35') which enables said device (3) to access the private portion (122) of the message (12) stored on the secure server (2), said communication module (35') having sub-modules (351, 352, 353) to operate on the resources of the receiving communication device (3), said sub-modules comprising an interface sub-module to display the message (12) graphically on the screen (34), and a sub-module for controlling the non-volatile electronic memory (33) of the receiving communication device (3), so that the private portion of the message (122) is not stored in the non-volatile electronic memory (33) of the receiving communication device (3) and wherein the public portion (121) of the message (12) sent to the receiving communication device (3) contains a trigger for the communication module of the receiving communication device (3) to initiate communication with the server (2) via the communication module of the receiving mobile communication device (3), the trigger being an instruction for an application residing in the receiving mobile device (3) and causing the receiving mobile device (3) to access the server, without the need for the user to initiate the communication.

2. System according to claim 1, **characterised in that** the memory control sub-module deletes the information relating to the private portion (122) once the interface sub-module has displayed said private portion (122) graphically on the screen (34).

3. System, according to claim 1 or 2, wherein said instruction is added by the message processing module (21).

4. System according to any one of claims 1 to 3, **characterised in that** the message (12) sent by the sending communication device contains a public portion (121) and a private portion (122).

5. System according to any one of claims 1 to 4, **characterised in that** the secure server (2) sends the public portion (121) to a mobile messaging server (60, 22).

6. System according to any one of claims 1 to 4, **characterised in that** the secure server (2) comprises the mobile messaging server (60, 22) as an integrated module.

7. System according to any one of claims 1 to 6, **characterised in that** the secure server (2) also comprises a module (23) for managing secure communications with receiving mobile devices.

8. System according to any one of claims 1 to 7, **characterised in that** the sending device (1) comprises a communication module for communicating with the secure server (2).

9. System according to claim 8, **characterised in that** the communication module or modules comprise(s) a data-compression sub-module (36), an IP communication module (38) and a mobile telephone messaging communications sub-module (37).

10. System according to any one of claims 1 to 9, **characterised in that** the receiving communication device (3) is a mobile receiving communication device.

11. System according to any one of claims 1 to 10, **characterised in that** the sending communication device (1) is a mobile telephone device.

12. System according to any one of claims 1 to 11, **characterised in that** communications with the secure server (2) relating to messages comprising private portions (122) are encrypted.

13. System according to any one of claims 1 to 12, **characterised in that** the secure server (2) requests user identification and password to receive or send messages comprising private portions (122).

14. System according to any one of claims 1 to 13, **characterised in that** communications of private messages between the receiving communication device (3) and the secure server (2) are of the HTTP type.

## Patentansprüche

1. Kommunikationssystem, umfassend
- ein sendendes Kommunikationsgerät (1),
- einen Server (60, 22) für Mobilbenachrichtigungen und
- ein empfangendes Kommunikationsgerät (3),
wobei das Kommunikationssystem von dem Typ ist, bei dem das sendende Kommunikationsgerät (1) eine Mobiltelefonnachricht über ein Kommunikationsnetzwerk zu dem Server (60) für Mobilbenachrichtigungen sendet (61), der sie wiederum an das empfangende Kommunikationsgerät (3) über ein Mobilfunk-Kommunikationsnetzwerk sendet,
wobei der Server (60, 22) mit einem Kommunikationsmodul zum Empfangen und Senden der Mobiltelefonnachricht versehen ist,
wobei das empfangende Kommunikationsgerät (3) mit einem nichtflüchtigen elektronischen Speicher (33) zum Speichern der Mobiltelefonnachricht, einem Benutzerschnittstellendisplay (34) und einem Modul, um die gespeicherte Mobiltelefonnachricht auf dem Schnittstellendisplay (34) anzuzeigen versehen ist, wobei
das sendende Kommunikationsgerät (1) eine Nachricht (12) sendet, die zumindest einen privaten Teil (122) umfasst, wobei die Nachricht (12) zu einem gesicherten Server (2) gesendet wird, der im System enthalten ist, wobei der gesicherte Server (2) ein Nachrichtenverarbeitungsmodul (21) zum Erkennen und Verwalten der öffentlichen (121) und privaten (122) Teile der empfangenen Nachricht (12) umfasst, so dass das Kommunikationsmodul des Servers nur den öffentlichen Teil (121) der Nachricht (12) über den Server (60, 22) für Mobilbenachrichtigungen an das empfangende Kommunikationsgerät (3) sendet und den privaten Teil (121) auf dem gesicherten Server (2) lässt, wo er über einen unterschiedlichen Kommunikationskanal zum Abruf verfügbar ist,
wobei das empfangende Kommunikationsgerät
(3) ein Kommunikationsmodul (35') aufweist, das es dem Gerät (3) ermöglicht, auf den privaten Teil (122) der Nachricht (12) zuzugreifen, der auf dem gesicherten Server (2) gespeichert ist, wobei das Kommunikationsmodul (35') Untermodule (351, 352, 353) aufweist, die mit den Ressourcen des empfangenden Kommunikationsgeräts (3) arbeiten, wobei die Untermodule ein Schnittstellen-Untermodul umfassen, um die Nachricht (12) graphisch auf dem Display (34) anzuzeigen, und ein Untermodul zum Steuern des nichtflüchtigen elektronischen Speichers (33) des empfangenden Kommunikationsgeräts (3), so dass der private Teil der Nachricht (122) nicht in dem nichtflüchtigen elektronischen Speicher (33) des empfangenden Kommunikationsgeräts (3) gespeichert wird, und wobei der öffentliche Teil (121) der Nachricht (12), die an das empfangende Kommunikationsgerät (3) gesendet wird, einen Auslöser für das Kommunikationsmodul des empfangenden Kommunikationsgeräts (3) umfasst, um die Kommunikation mit dem Server (2) über das Kommunikationsmodul des empfangenden mobilen Kommunikationsgeräts (3) einzuleiten, wobei der Auslöser eine Anweisung für eine auf dem empfangenden Mobilgerät (3) befindliche Anwendung ist
und verursacht, dass das empfangende Mobilgerät (3) auf den Server zugreift, ohne dass erforderlich ist, dass der Benutzer die Kommunikation einleitet.

2. System nach Anspruch 1, **dadurch gekennzeichnet, dass** das Untermodul zum Steuern des Speichers die sich auf den privaten Teil (122) beziehenden Informationen löscht, wenn das Schnittstellen-Untermodul den privaten Anteil (122) graphisch auf dem Display angezeigt hat (34).

3. System nach Anspruch 1 oder 2, wobei die Anweisung durch das Nachrichtenverarbeitungsmodul (21) ergeht.

4. System nach einem der Ansprüche 1 bis 3, **dadurch gekennzeichnet, dass** die Nachricht (12), die durch das sendende Kommunikationsgerät gesendet wird, einen öffentlichen Teil (121) und einen privaten Teil (122) umfasst.

5. System nach einem der Ansprüche 1 bis 4, **dadurch gekennzeichnet, dass** der gesicherte Server (2) den öffentlichen Teil (121) an einen Server (60, 22) für Mobilbenachrichtigungen sendet.

6. System nach einem der Ansprüche 1 bis 4, **dadurch gekennzeichnet, dass** der gesicherte Server (2) den mobilen Server (60, 22) für Mobilbenachrichtigungen als ein integriertes Modul umfasst.

7. System nach einem der Ansprüche 1 bis 6, **dadurch gekennzeichnet, dass** der gesicherte Server (2) weiterhin ein Modul (23) zum Verwalten gesicherter Kommunikation mit empfangenden Mobilgeräten umfasst.

8. System nach einem der Ansprüche 1 bis 7, **dadurch gekennzeichnet, dass** das sendende Gerät (1) ein Kommunikationsmodul zum Kommunizieren mit dem gesicherten Server (2) umfasst.

9. System nach Anspruch 8, **dadurch gekennzeichnet, dass** das Kommunikationsmodul oder die -module ein Datenkomprimierungs-Untermodul (36), ein IP-Kommunikationsmodul (38) und ein Mobiltelefonnachrichtenkommunikations-Untermodul (37) umfasst bzw. umfassen.

10. System nach einem der Ansprüche 1 bis 9, **dadurch gekennzeichnet, dass** das empfangende Kommunikationsgerät (3) ein mobiles empfangendes Kommunikationsgerät ist.

11. System nach einem der Ansprüche 1 bis 10, **dadurch gekennzeichnet, dass** das sendende Kommunikationsgerät (1) ein mobiles Telefongerät ist.

12. System nach einem der Ansprüche 1 bis 11, **dadurch gekennzeichnet, dass** die Kommunikation mit dem gesicherten Server (2), die sich auf Nachrichten bezieht, die private Teile (122) umfassen, verschlüsselt ist.

13. System nach einem der Ansprüche 1 bis 12, **dadurch gekennzeichnet, dass** der gesicherte Server (2) eine Benutzeridentifikation und ein Passwort erfordert, um Nachrichten zu empfangen oder zu senden, die private Teile (122) umfassen.

14. System nach einem der Ansprüche 1 bis 13, **dadurch gekennzeichnet, dass** Übermittlungen privater Nachrichten zwischen dem empfangenden Kommunikationsgerät (3) und dem gesicherten Server (2) vom Typ HTTP sind.

## Revendications

1. Système de communication comprenant :
- un dispositif de communication en émission (1),
- un serveur de messagerie mobile (60, 22), et
- un dispositif de communication en réception (3),
ledit système de communication étant du type dans lequel le dispositif de communication en émission (1) envoie (61) un message de téléphone mobile par l'intermédiaire d'un réseau de communication au serveur de messagerie mobile (60), lequel à son tour l'envoie vers le dispositif de communication en réception (3) par l'intermédiaire d'un réseau de communication de téléphonie mobile,
le serveur (60, 22) étant doté d'un module de communication pour recevoir et envoyer ledit message de téléphone mobile,
le dispositif de communication en réception (3) étant doté d'une mémoire électronique non-volatile (33) pour stocker ledit message de téléphone mobile, d'un écran d'interface utilisateur (34) et d'un module pour afficher ledit message de téléphone mobile stocké sur l'écran d'interface (34),
dans lequel le dispositif de communication en émission (1) envoie un message (12), qui contient au moins une partie privée (122), ledit message (12) étant envoyé à un serveur sécurisé (2) compris à l'intérieur du système, ledit serveur sécurisé (2) comprenant un module de traitement de message (21) pour reconnaître et gérer les parties publiques (121) et privées (122) du message (12) reçu, de telle sorte que le module de communication du server envoie seulement la partie publique (121) du message (12) par l'intermédiaire du serveur de messagerie mobile (60, 22) au dispositif de communication en réception (3), laissant la partie privée (121) dans le serveur sécurisé (2) disponible à la consultation par le biais d'un canal de communication différent, dans lequel le dispositif de communication en réception (3) présente un module de communication (35') qui permet au dit dispositif (3) d'accéder à la partie privée (122) du message (12) stocké sur le serveur sécurisé (2), ledit module de communication (35') présentant des sous-modules (351, 352, 353) pour fonctionner sur les ressources du dispositif de communication en réception (3), lesdits sous-modules comprenant un sous-module d'interface pour afficher le message (12) de manière graphique sur l'écran (34), et un sous-module pour commander la mémoire électronique non-volatile (33) du dispositif de communication en réception (3), de sorte que la partie privée du message (122) n'est pas stockée dans la mémoire électronique non-volatile (33) du dispositif de communication en réception (3) et dans lequel la partie publique (121) du message (12) envoyée au dispositif de communication en réception (3) contient un élément déclencheur pour le module de communication du dispositif de communication en réception (3) afin d'initier la communication avec le serveur (2) par l'intermédiaire du module de communication du dispositif de communication mobile en réception (3), l'élément déclencheur étant une instruction pour une application se trouvant dans le dispositif mobile en réception (3) et amenant le dispositif mobile en réception (3) à accéder au serveur, sans avoir besoin que l'utilisateur initie la communication.

2. Système selon la revendication 1, **caractérisé en ce que** le sous-module de contrôle mémoire supprime les informations concernant la partie privée (122) une fois que le sous-module d'interface a affiché ladite partie privée (122) de manière graphique sur l'écran (34).

3. Système selon la revendication 1 ou 2, dans lequel ladite instruction est ajoutée par le module de traitement de message (21).

4. Système selon une quelconque des revendications 1 à 3, **caractérisé en ce que** le message (12) envoyé par le dispositif de communication en émission contient une partie publique (121) et une partie privée (122).

5. Système selon une quelconque des revendications 1 à 4, **caractérisé en ce que** le serveur sécurisé (2) envoie la partie publique (121) à un serveur de messagerie mobile (60, 22).

6. Système selon une quelconque des revendications 1 à 4, **caractérisé en ce que** le serveur sécurisé (2) comprend le serveur de messagerie mobile (60, 22) comme un module intégré.

7. Système selon une quelconque des revendications 1 à 6, **caractérisé en ce que** le serveur sécurisé (2) comprend également un module (23) pour gérer des communications sécurisées avec des dispositifs mobiles en réception.

8. Système selon une quelconque des revendications 1 à 7, **caractérisé en ce que** le dispositif en émission (1) comprend un module de communication pour communiquer avec le serveur sécurisé (2).

9. Système selon la revendication 8, **caractérisé en ce que** le ou les module(s) de communication comprend (comprennent) un sous-module de compression de données (36), un module de communication IP (38) et un sous-module de communications de messagerie de téléphonie mobile (37).

10. Système selon une quelconque des revendications 1 à 9, **caractérisé en ce que** le dispositif de communication en réception (3) est un dispositif de communication en réception mobile.

11. Système selon une quelconque des revendications 1 à 10, **caractérisé en ce que** le dispositif de communication en émission (1) est un dispositif de téléphonie mobile.

12. Système selon une quelconque des revendications 1 à 11, **caractérisé en ce que** des communications avec le serveur sécurisé (2) concernant des messages comprenant des parties privées (122) sont cryptées.

13. Système selon une quelconque des revendications 1 à 12, **caractérisé en ce que** le serveur sécurisé (2) demande une identification et un mot de passe utilisateur pour recevoir ou envoyer des messages comprenant des parties privées (122).

14. Système selon une quelconque des revendications 1 à 13, **caractérisé en ce que** des communications de messages privés entre le dispositif de communication en réception (3) et le serveur sécurisé (2) sont du type HTTP.
